(19) Europäisches Patentamt
European Patent Office
Office européen des brevets

(11) **EP 3 502 811 A1**

(12) **EUROPÄISCHE PATENTANMELDUNG**

(43) Veröffentlichungstag:
26.06.2019 Patentblatt 2019/26

(51) Int Cl.:
*G05B 19/042* (2006.01)    *H02K 29/06* (2006.01)
*H02P 6/00* (2016.01)

(21) Anmeldenummer: 17209247.0

(22) Anmeldetag: 21.12.2017

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**MA MD TN**

(71) Anmelder: **Siemens Aktiengesellschaft**
**80333 München (DE)**

(72) Erfinder: **Künzel, Stefan**
**91056 Erlangen (DE)**

(54) **ANTRIEBSSTEUERUNG MIT EIGENSTÄNDIGER FEHLERKORREKTUR VON LAGEFEHLERN**

(57) Ein elektrischer Antrieb weist eine über einen Umrichter (2) mit elektrischer Energie versorgte elektrische Maschine (1) auf. In einem Normalbetrieb nimmt eine Antriebssteuerung (5) für den elektrischen Antrieb kontinuierlich von einem eine Drehstellung einer Rotorwelle (8) der elektrischen Maschine (1) erfassenden Lagegeber (9) jeweils Rohsignale (x, y, α') entgegen und ermittelt anhand der Rohsignale (x, y, α')in Verbindung mit Korrekturgrößen (rej, imj) jeweils eine Istlage (a) der Rotorwelle (8). In Abhängigkeit von einer jeweiligen Solllage (α*) und der jeweiligen Istlage (a) oder einer jeweiligen Solldrehzahl (n*) und einer unter Verwendung der jeweiligen Istlage (a) ermittelten jeweiligen Istdrehzahl (n) der elektrischen Maschine (1) ermittelt sie jeweilige Steuersignale (U*) für den Umrichter (2) und gibt sie an den Umrichter (2) aus. In einem Sonderbetrieb ermittelt die Antriebssteuerung (5) zunächst Steuersignale (U*) für den Umrichter (2), aufgrund derer die Rotorwelle (8) mit einer Anfangsdrehzahl (n1) rotiert, und gibt sie an den Umrichter (2) aus. Sodann betreibt sie die elektrische Maschine (1) kraftlos, so dass die Rotorwelle (8) austrudelt. Während des Austrudelns nimmt die Antriebssteuerung (5) von dem Lagegeber (9) kontinuierlich jeweils Rohsignale (x, y, α')entgegen, ermittelt daraus jeweils eine Rohlage (α') der Rotorwelle (8) und speichert sie. Anhand einer Vielzahl von im Sonderbetrieb ermittelten Rohlagen (α') ermittelt sie die Korrekturgrößen (rej, imj) und hinterlegt sie in einem Korrekturgrößenspeicher (11), so dass sie im Normalbetrieb für die Ermittlung der jeweiligen Istlage (a) zur Verfügung stehen.

## FIG 2

$$\alpha = \sum_{i=0}^{N1} k_i \cdot t^i$$

**Beschreibung**

Die vorliegende Erfindung geht aus von einer Antriebssteuerung für einen elektrischen Antrieb, der eine über einen Umrichter mit elektrischer Energie versorgte elektrische Maschine aufweist, wobei die Antriebssteuerung in einem Normalbetrieb kontinuierlich

- von einem eine Drehstellung einer Rotorwelle der elektrischen Maschine erfassenden Lagegeber jeweils Rohsignale entgegennimmt,
- anhand der jeweiligen Rohsignale in Verbindung mit Korrekturgrößen jeweils eine Istlage der Rotorwelle ermittelt und
- in Abhängigkeit von einer jeweiligen Solllage und der jeweiligen Istlage oder einer jeweiligen Solldrehzahl und einer unter Verwendung der jeweiligen Istlage ermittelten jeweiligen Istdrehzahl der Rotorwelle jeweilige Steuersignale für den Umrichter ermittelt und an den Umrichter ausgibt.

Die vorliegende Erfindung geht weiterhin aus von einem elektrischen Antrieb, der einen Umrichter, eine über den Umrichter mit elektrischer Energie versorgte elektrische Maschine und eine Antriebssteuerung aufweist.

Bei geregelten elektrischen Maschinen wird häufig zur Messung von Lage oder Drehzahl ein Lagegeber an die Rotorwelle angebaut. Der Lagegeber liefert sodann im Betrieb der elektrischen Maschine jeweils Rohsignale, anhand derer eine jeweilige Istlage der Rotorwelle ermittelt wird und/oder unter Differenzierung der jeweiligen Istlage eine jeweilige Istdrehzahl der Rotorwelle ermittelt wird. Die jeweilige Istlage wird sodann zur Lageregelung auf eine Solllage verwendet bzw. die jeweilige Istdrehzahl zur Drehzahlregelung auf eine Solldrehzahl verwendet.

In der Praxis geschieht es oftmals, dass die Motorwelle und die Geberwelle einen - wenn auch nur geringen - Versatz zueinander aufweisen. Ein derartiger Versatz führt in den von dem Lagegeber ausgegebenen Rohsignalen zu einem systematischen Messfehler. Der Messfehler ist periodisch zur Drehstellung der Rotorwelle, d.h. der Istlage. In manchen Fällen weist der Fehler ausschließlich oder nahezu ausschließlich eine Komponente auf, deren Periodizität mit der Periodizität der Drehstellung korrespondiert (Grundschwingung). In anderen Fällen weist der Fehler zusätzlich weitere Komponenten auf, deren Periodizität mit einem ganzzahligen Vielfachen der Periodizität der Drehstellung korrespondiert (Oberschwingungen). Insbesondere die erste Oberschwingung, bei welcher die Periodizität des Fehlers mit dem Doppelten der Periodizität der Drehstellung korrespondiert, ist oftmals von Bedeutung. Die Fehler sind besonders unangenehm, wenn aus der ermittelten Istlage durch Differenzieren die Drehzahl ermittelt wird. Denn aufgrund der Differenzierung steigt die Amplitude des Fehlers proportional mit der Drehzahl an.

Im optimalen Fall wird der Fehler durch eine entsprechend genaue Positionierung des Gebers beim Anbau an die elektrische Maschine vermieden oder zumindest gering gehalten. In anderen Fällen wird der Fehler durch Korrekturgrößen berücksichtigt. Die vorliegende Erfindung betrifft die letztgenannte Vorgehensweise, bei welcher der Fehler durch Korrekturgrößen berücksichtigt.

Die Aufgabe der vorliegenden Erfindung besteht darin, Möglichkeiten zu schaffen, mittels derer die benötigten Korrekturgrößen auf einfache und zuverlässige Weise ermittelt werden können.

Die Aufgabe wird durch eine Antriebssteuerung mit den Merkmalen des Anspruchs 1 gelöst. Vorteilhafte Ausgestaltungen der Antriebssteuerung sind Gegenstand der abhängigen Ansprüche 2 bis 8.

Erfindungsgemäß wird eine Antriebssteuerung der eingangs genannten Art dadurch ausgestaltet, dass die Antriebssteuerung in einem Sonderbetrieb

- zunächst Steuersignale für den Umrichter ermittelt, aufgrund derer die Rotorwelle mit einer Anfangsdrehzahl rotiert, und diese Steuersignale an den Umrichter ausgibt,
- sodann die elektrische Maschine kraftlos betreibt, so dass die Rotorwelle austrudelt,
- während des Austrudelns der Rotorwelle von dem Lagegeber kontinuierlich jeweils Rohsignale entgegennimmt und anhand der jeweiligen Rohsignale jeweils eine Rohlage der Rotorwelle ermittelt und zwischenspeichert,
- anhand einer Vielzahl von im Sonderbetrieb ermittelten Rohlagen die Korrekturgrößen ermittelt und
- die Korrekturgrößen in einem Korrekturgrößenspeicher der Antriebssteuerung hinterlegt, so dass sie im Normalbetrieb für die Ermittlung der jeweiligen Istlage zur Verfügung stehen.

Durch diese Vorgehensweise können die Korrekturgrößen von der Antriebssteuerung selbst ermittelt werden, ohne weitere Komponenten zu benötigen. Insbesondere ist es nicht erforderlich, die Korrekturgrößen anderweitig - beispielsweise mittels eines weiteren Lagegebers, der seinerseits fehlerbehaftet sein kann oder aber hochgenau positioniert werden muss - zu ermitteln.

Vorzugsweise wird der Sonderbetrieb nur so lange beibehalten, solange die Rotorwelle schnell genug rotiert. Vorzugsweise prüft die Antriebssteuerung im Sonderbetrieb daher anhand der jeweiligen Rohsignale jeweils, ob eine aktuelle Drehzahl der Rotorwelle eine Minimaldrehzahl erreicht oder unterschreitet. Bei Erreichen oder Unterschreiten der Minimaldrehzahl beendet die Antriebssteuerung das Ermitteln und Zwischenspeichern der Rohlagen und geht zur Ermittlung der Korrekturgrößen über. Dieser Ansatz beruht auf dem Gedanken, dass bei einer hinreichend hoher Drehzahl (d.h. einer Drehzahl oberhalb der Minimaldrehzahl) Störungen der gleichmäßigen Rotation beispielsweise durch Nutrastmomente und dergleichen hinreichend klein sind, so dass sie vernachlässigt werden können. Bei einer kleineren Drehzahl (d.h. einer Drehzahl unterhalb der Minimaldrehzahl) können derartige Störungen hingegen Fehler bewirken, die nicht mehr ohne weiteres vernachlässigt werden können.

In der Regel modelliert die Antriebssteuerung das Austrudeln der Rotorwelle gemäß einem Modell, das eine Anzahl von Modellparametern aufweist. Vorzugsweise ermittelt die Antriebssteuerung anhand der im Sonderbetrieb ermittelten Rohlagen nicht nur die Korrekturgrößen, sondern auch die Modellparameter. Dadurch können insbesondere durch das Modell als solches hervorgerufene Fehler verringert bzw. vermieden werden.

Das Modell kann beispielsweise die Form

$$\alpha = \sum_{i=0}^{N1} ki \cdot t^{i} \tag{1}$$

aufweisen, wobei t die Zeit ab dem Beginn des kraftlosen Betreibens der elektrischen Maschine ist und ki die Modellparameter sind. Der Modellparameter k0 ist durch die Rohlage zum Zeitpunkt des Beginns des kraftlosen Betreibens der elektrischen Maschine bestimmt, der Modellparameter k1 durch die Anfangsdrehzahl. Die Modellparameter k2, k3 usw. modellieren das allmähliche Austrudeln als solches. Insbesondere modelliert der Modellparameter k2 die durch Reibung und dergleichen verursachte Verzögerung und modelliert der Modellparameter k3 den Ruck.

Die höchste in dem Modell betrachtete Potenz der Zeit ist mindestens die zweite Potenz der Zeit, d.h. die Beschleunigung. Anderenfalls würde angenommen, dass die einmal eingestellte Drehzahl - d.h. die Anfangsdrehzahl - konstant bleibt. Oftmals ist es ausreichend, wenn die höchste in dem Modell betrachtete Potenz der Zeit die dritte Potenz der Zeit ist, d.h. der Ruck. In manchen Fällen kann es jedoch erforderlich sein, zusätzlich auch noch die vierte Potenz der Zeit zu betrachten. Eine Berücksichtigung noch höherer Potenzen der Zeit ist zwar möglich, in der Regel aber nicht erforderlich.

Zur Fehlerkorrektur ermittelt die Antriebssteuerung im Normalbetrieb aus den jeweils entgegengenommenen Rohsignalen jeweils eine Rohlage und sodann aus der jeweiligen Rohlage anhand der Beziehung

$$\alpha = \alpha' - \sum_{j=1}^{N2} \left[ rej \cdot \cos(j\alpha') + imj \cdot \sin(j\alpha') \right] \tag{2}$$

die zugehörige jeweilige Istlage der Rotorwelle. Hierbei sind $\alpha$ die jeweilige Istlage und $\alpha'$ die jeweilige Rohlage. rej und imj sind die Korrekturgrößen. Je nach Lage des Einzelfalls kann es ausreichen, im Normalbetrieb nur das Einfache der jeweiligen Rohlage zu berücksichtigen, also nur die Grundfrequenz. Falls auch ganzzahligen Vielfache der jeweiligen Rohlage berücksichtigt werden müssen, ist es oftmals ausreichend, zusätzlich zur Grundfrequenz nur die erste Oberschwingung zu berücksichtigen, also das Zweifache der jeweiligen Rohlage.

Vorzugsweise ermittelt die Antriebssteuerung die Korrekturgrößen anhand eines überbestimmten Gleichungssystems, wobei die Antriebssteuerung weiterhin die Korrekturgrößen gemäß einem Verfahren ermittelt, bei dem die Fehlerquadrate minimiert werden. Dadurch kann die Genauigkeit der Ermittlung der Korrekturgrößen gesteigert werden.

Die Aufgabe wird weiterhin durch einen elektrischen Antrieb mit den Merkmalen des Anspruchs 9 gelöst. Erfindungsgemäß ist bei einem elektrischen Antrieb der eingangs genannten Art die Antriebssteuerung als erfindungsgemäße Antriebssteuerung ausgebildet.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:

FIG 1          einen elektrischen Antrieb und seine Steuerung,
FIG 2          eine Antriebssteuerung,
FIG 3 bis 5    je ein Ablaufdiagramm,
FIG 6          ein Zeitdiagramm,
FIG 7          einen Lösungsansatz zur Bestimmung von Korrekturgrößen und Modellparametern,
FIG 8 und 9    je einen Lösungsvektor,
FIG 10 und 11  je eine Matrix und
FIG 12         einen Rohlagenvektor.

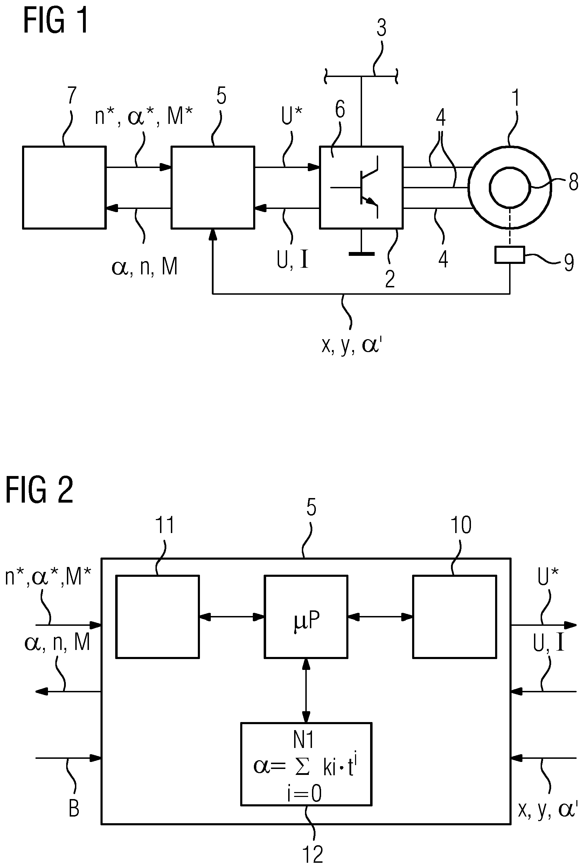

Gemäß FIG 1 weist ein elektrischer Antrieb eine elektrische Maschine 1 auf. Die elektrische Maschine 1 wird über einen Umrichter 2 mit elektrischer Energie versorgt. Der Umrichter 2 ist seinerseits an ein Versorgungsnetz 3 oder dergleichen angeschlossen. Der Umrichter 2 umfasst insbesondere die Steuersätze zum temporären Anschalten des Versorgungsnetzes 3 an die Phasen 4 der elektrischen Maschine 1. Dem Umrichter 2 werden von einer Antriebssteuerung 5 Steuersignale U* zugeführt, beispielsweise in Form von Soll-Phasenspannungen. Anhand der Steuersignale U* ermittelt der Umrichter 2 die zugehörige Ansteuerung von internen Halbleiterschaltelementen 6, beispielsweise von IGBTs. Von den internen Halbleiterschaltelementen 6 ist in FIG 1 nur eines angedeutet. Mittels der internen Halbleiterschaltelemente 6 wird das Anschalten des Versorgungsnetzes 3 an die Phasen 4 der elektrischen Maschine 1 realisiert. Der Umrichter 2 übermittelt umgekehrt Istgrößen U, I an die Antriebssteuerung 5 zurück. Bei den Istgrößen U, I kann es sich beispielsweise um eine Zwischenkreisspannung eines den Halbleiterschaltelementen 6 vorgeordneten Zwischenkreises, um Ist-Phasenspannungen und um Ist-Phasenströme handeln. Die Kommunikation zwischen dem Umrichter 2 und der Antriebssteuerung 5 - also die Übermittlung der Steuersignale U* und die Übermittlung der Istgrößen U, I - erfolgt mit einem Stromreglertakt, der in der Regel bei mindestens 8 kHz liegt, manchmal auch bei größeren Werten wie beispielsweise 16 kHz oder 32 kHz.

Die Antriebssteuerung 5 ist in FIG 2 dargestellt. Sie kann im Einzelfall als alleinige Steuereinrichtung für die elektrische Maschine 1 wirken. In der Regel ist die Antriebssteuerung 5 jedoch entsprechend der Darstellung in FIG 1 einer weiteren Steuereinrichtung 7 untergeordnet. Die weitere Steuereinrichtung 7 kann beispielsweise als numerische Steuerung (CNC = computer numerical control) oder als Bewegungssteuerung (MC = motion control) ausgebildet sein. In diesem Fall nimmt die Antriebssteuerung 5 von der weiteren Steuereinrichtung 7 mindestens einen übergeordneten Sollwert entgegen und übermittelt mindestens einen übergeordneten Istwert an die weitere Steuereinrichtung 7 zurück. Der übergeordnete Sollwert ist üblicherweise ein Drehzahlsollwert $n^*$. Es kann sich alternativ aber auch um einen Lagesollwert $\alpha^*$ oder einen Momentsollwert $M^*$ handeln. Der übergeordnete Istwert ist in der Regel ein Lageistwert $\alpha$. Es kann sich alternativ aber auch um einen Drehzahlistwert n oder einen Momentistwert M handeln. Es ist auch möglich, dass die Antriebssteuerung 5 mehrere Istwerte an die weitere Steuereinrichtung 7 übermittelt, beispielsweise einen Lageistwert $\alpha$ und zusätzlich einen Drehzahlistwert n.

Die Kommunikation zwischen der Antriebssteuerung 5 und der weiteren Steuereinrichtung 7 - also die Übermittlung der übergeordneten Sollwerte und die Übermittlung der Istwerte - erfolgt mit einem weiteren Arbeitstakt, der je nach Art des übergeordneten Sollwertes ein Drehzahlreglertakt oder ein Lagereglertakt oder ein Momentreglertakt ist. Der weitere Arbeitstakt liegt in der Regel bei mindestens 8 kHz, manchmal auch bei größeren Werten wie beispielsweise 16 kHz oder 32 kHz. In jedem Fall aber ist der weitere Arbeitstakt maximal so groß wie der Stromreglertakt. Wenn also beispielsweise der Stromreglertakt 16 kHz beträgt, kann der weitere Arbeitstakt beispielsweise 8 kHz oder 16 kHz sein, nicht aber 32 kHz.

Der Lageistwert $\alpha$ - nachfolgend auch als Istlage $\alpha$ bezeichnet - entspricht der momentanen Drehstellung einer Rotorwelle 8 der elektrischen Maschine 1. Die Istlage $\alpha$ oder eine unter Verwendung der Istlage $\alpha$ ermittelte Istdrehzahl n (d.h. der Drehzahlistwert) wird von der Antriebssteuerung 5 intern verwendet, um die Steuersignale U* korrekt zu ermitteln. Zur Erfassung der Drehstellung = Istlage $\alpha$ ist ein Lagegeber 9 vorhanden. Der Lagegeber 9 erfasst Gebersignale, beispielsweise ein sogenanntes Sinussignal y und ein sogenanntes Cosinussignal x. Es ist möglich, dass der Lagegeber 9 aus dem Sinussignal y und dem Cosinussignal x selbst einen Winkel $\alpha'$ (= Rohlage $\alpha'$) ermittelt und als Rohsignal $\alpha'$ den Winkel $\alpha'$ an die Antriebssteuerung 5 übermittelt. Alternativ ist es möglich, dass der Lagegeber 9 als Rohsignale x, y das Sinussignal y und das Cosinussignal x an die Antriebssteuerung 5 übermittelt und die Antriebssteuerung 5 daraus die Rohlage $\alpha'$ ermittelt. Welche dieser beiden Vorgehensweisen ergriffen wird, ist im Rahmen der vorliegenden Erfindung von untergeordneter Bedeutung. Auch ist es alternativ möglich, die vom Lagegeber 9 an die Antriebssteuerung 5 übermittelten Signale direkt an die Antriebssteuerung 5 zu übermitteln oder über den Umrichter 2 an die Antriebssteuerung 5 zu übermitteln. Auch hier ist im Rahmen der vorliegenden Erfindung von untergeordneter Bedeutung, welche dieser beiden Vorgehensweisen ergriffen wird. Entscheidend ist, dass die Übermittlung im Stromreglertakt erfolgt.

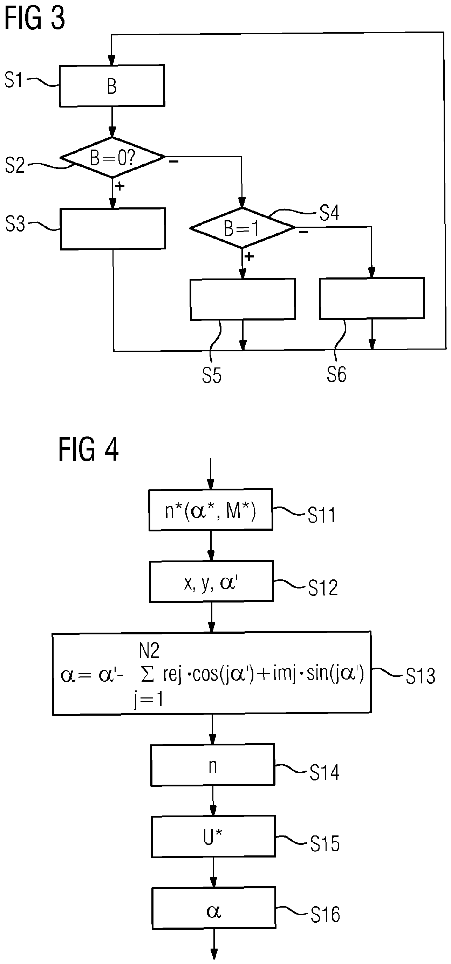

Gemäß FIG 3 arbeitet die Antriebssteuerung 5 wie folgt:

In einem Schritt S1 nimmt die Antriebssteuerung 5 ein Modussignal B entgegen. Das Modussignal B kann mindestens zwei verschiedene Werte aufweisen, nachfolgend als 0 und 1 bezeichnet. Es kann gegebenenfalls auch andere Werte aufweisen. Die Antriebssteuerung 5 prüft in einem Schritt S2, ob das Modussignal B den Wert 0 aufweist. In diesem Fall geht die Antriebssteuerung 5 zu einem Schritt S3 über. Im Schritt S3 führt die Antriebssteuerung 5 einen Normalbetrieb aus. Der Normalbetrieb wird später in Verbindung mit FIG 4 näher erläutert werden. Anderenfalls prüft die Antriebssteuerung 5 in einem Schritt S4, ob das Modussignal B den Wert 1 aufweist. In diesem Fall geht die Antriebssteuerung 5 zu einem Schritt S5 über. Im Schritt S5 führt die Antriebssteuerung 5 einen Sonderbetrieb aus. Anderenfalls geht die Antriebssteuerung 5 zu einem Schritt S6 über. Im Schritt S6 führt die Antriebssteuerung 5 andere Maßnahmen aus, die im Rahmen der vorliegenden Erfindung von untergeordneter Bedeutung sind. Die Abfolge der Schritte S1, S2, S3 erfolgt im Stromreglertakt. Der Schritt S5 und gegebenenfalls auch der Schritt S6 können längere Zeit in Anspruch nehmen.

Es ist auch möglich, dass das Modussignal B ausschließlich die Werte 0 und 1 annehmen kann. In diesem Fall können die Schritte S4 und S6 entfallen und kann vom Schritt S2 gegebenenfalls direkt zum Schritt S5 übergegangen werden.

Nachfolgend wird in Verbindung mit FIG 4 der Normalbetrieb erläutert.

Im Normalbetrieb wird der Antriebssteuerung 5 in einem Schritt S11 ein übergeordneter Sollwert bekannt. Beispielsweise kann die Antriebssteuerung 5 im Schritt S11 von der weiteren Steuereinrichtung 7 einen Drehzahlsollwert n* entgegennehmen oder den zuletzt entgegengenommenen Drehzahlsollwert n* erneut verwenden. In einem Schritt S12 nimmt die Antriebssteuerung 5 vom Lagegeber 9 dessen Rohsignale x, y, α' entgegen.

In einem Schritt S13 ermittelt die Antriebssteuerung 5 aus den Rohsignalen x, y, α' eine Istlage α der Rotorwelle 8. Insbesondere ermittelt die Antriebssteuerung 5 die Istlage α aus der zugehörigen Rohlage α' in Verbindung mit Korrekturgrößen rej, imj (mit j = 1, 2, 3, ...). Falls die Antriebssteuerung 5 im Schritt S12 als Rohsignale das Sinussignal y und das Cosinussignal x entgegengenommen hat, ermittelt die Antriebssteuerung 5 im Schritt S13 zuvor aus den Rohsignalen x, y die Rohlage α'. Anderenfalls ist das Rohsignal α' selbst bereits die Rohlage α', die Ermittlung der Rohlage α' also trivial.

Der Schritt S13 kann auf verschiedene Art und Weise ausgestaltet sein. Insbesondere ist es möglich, dass die Antriebssteuerung 5 im Schritt S13 die Istlage α gemäß der Beziehung

$$\alpha = \alpha' - \sum_{j=1}^{N2} \left[ rej \cdot \cos(j\alpha') + imj \cdot \sin(j\alpha') \right] \qquad (3)$$

ermittelt. Äquivalent hierzu wäre eine Ermittlung, bei der Terme mit gleicher Frequenz (also Terme mit gleichem Index j) derart zusammengefasst werden, dass nur ein einziges Mal ein Sinus oder ein Cosinus ermittelt werden muss, nicht aber sowohl der Sinus als auch der Cosinus.

Im einfachsten Fall kann der Index j nur den Wert 1 annehmen. Alternativ kann der Index j den Wert 2 annehmen. Höhere Werte als 2 sind zwar ebenfalls möglich, im Regelfall aber nicht erforderlich.

Soweit erforderlich, ermittelt die Antriebssteuerung 5 in einem Schritt S14 die Istdrehzahl n. Sofern die Ermittlung erfolgt, erfolgt sie unter Verwertung der Istlage α, insbesondere durch zeitliche Differenzierung der Istlage α. In einem Schritt S15 ermittelt die Antriebssteuerung 5, beispielsweise anhand des Drehzahlsollwertes n* und der Istdrehzahl n oder des Lagesollwertes α* und der zugehörigen Istlage α, die zugehörigen Steuersignale U* für den Umrichter 2 und gibt sie an den Umrichter 2 aus. Soweit erforderlich, übermittelt die Antriebssteuerung 5 weiterhin in einem Schritt S16 die Istlage α oder eine andere Größe, beispielsweise die Istdrehzahl n, an die weitere Steuereinrichtung 7.

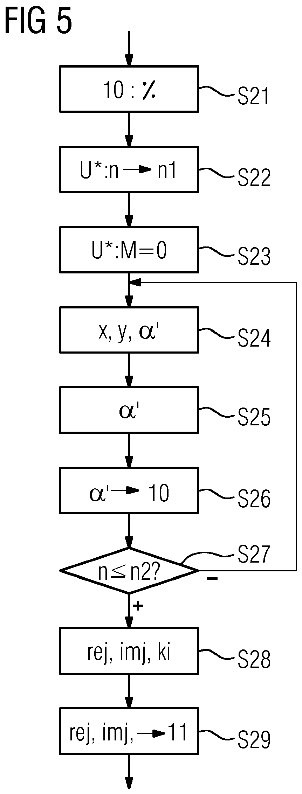

Nachfolgend wird in Verbindung mit FIG 5 der Sonderbetrieb erläutert.

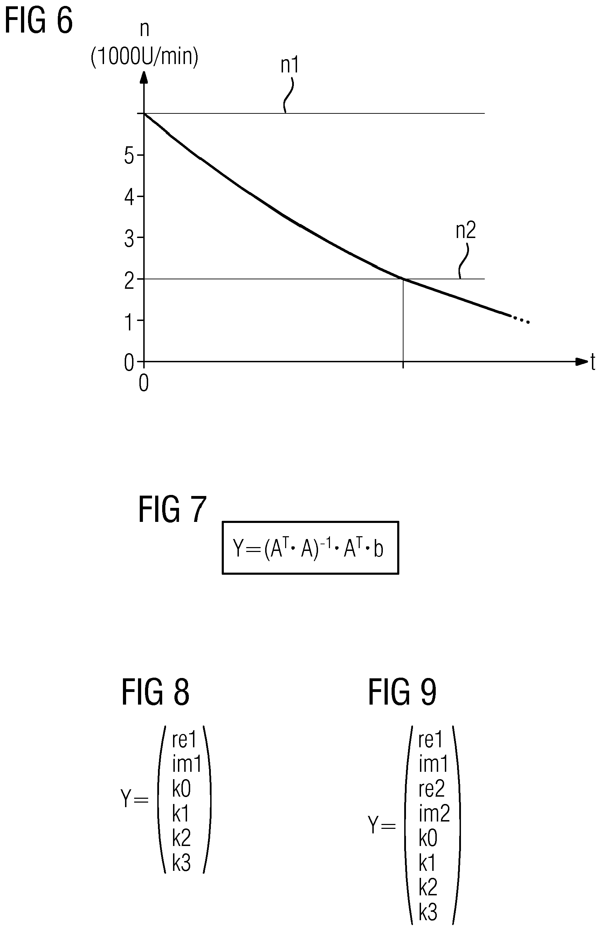

Im Sonderbetrieb löscht die Antriebssteuerung 5 zunächst in einem Schritt S21 den Inhalt eines Pufferspeichers 10. Als nächstes ermittelt die Antriebssteuerung 5 in einem Schritt S22 Steuersignale U* für den Umrichter 2, welche bewirken, dass die Rotorwelle 8 mit einer Anfangsdrehzahl n1 rotiert. Die Ermittlung derartiger Steuersignale U* ist Fachleuten ohne weiteres bekannt. Im Schritt S22 erfolgt auch die Ausgabe dieser Steuersignale U* an den Umrichter 2. Die Anfangsdrehzahl n1 wird relativ hoch gewählt, beispielsweise bei mehreren 1000 U/min. FIG 6 zeigt im negativen Bereich der Zeitachse diesen Zustand. Die Anfangsdrehzahl n1 ist im Beispiel von FIG 6 mit 6000 U/min angesetzt. Dieser konkrete Wert der Anfangsdrehzahl n1 ist jedoch rein beispielhaft.

Sodann ermittelt die Antriebssteuerung 5 in einem Schritt S23 andere Steuersignale U* für den Umrichter 2. Diese Steuersignale U* bewirken, dass die Antriebssteuerung 5 die elektrische Maschine 1 kraftlos betreibt. Auch die Ermittlung derartiger Steuersignale U* ist Fachleuten ohne weiteres bekannt. Beispielsweise kann die Ausgabe an Schaltimpulsen an die internen Halbleiterschalter 6 des Umrichters 2 gesperrt werden oder kann der Stromsollwert für die Phasen 4 auf 0 gesetzt werden. Auch diese Steuersignale U* werden im Schritt S23 an den Umrichter 2 ausgegeben. Die Ausführung des Schrittes S23 wird im weiteren Verlauf, d.h. insbesondere im Verlauf der wiederholten Ausführung der Schritte S24 bis S27, beibehalten. Auch ist es möglich, dies dadurch zu erreichen, dass der Schritt S23 zu einem Bestandteil der die Schritte S24 bis S27 enthaltenden Schleife gemacht wird.

Aufgrund des kraftlosen Betriebs der elektrischen Maschine 1 trudelt die Rotorwelle 8 aus. Die Drehzahl n der Rotorwelle 8 verringert sich also entsprechend der Darstellung in FIG 6 nach und nach aufgrund von Reibungsverlusten in den Lagern der elektrischen Maschine 1, oder äußeren Kräften, und sei es nur die - wenn auch geringe - Luftreibung der rotierenden Rotorwelle 8. Die Verringerung der Drehzahl n erfolgt über eine Vielzahl von vollständigen Umdrehungen der Rotorwelle 8.

In diesem Zustand - also während des Austrudelns der Rotorwelle 8 - werden wiederholt (und zwar im Stromreglertakt) die Schritte S24 bis S27 ausgeführt. Im Schritt S24 nimmt die Antriebssteuerung 5 von dem Lagegeber 9 jeweils Rohsignale x, y, $\alpha$' entgegen. Im Schritt S25 ermittelt die Antriebssteuerung 5 anhand der jeweiligen Rohsignale x, y, $\alpha$' jeweils die zugehörige Rohlage $\alpha$'. Falls die Antriebssteuerung 5 im Schritt S25 als Rohsignal $\alpha$' bereits die Rohlage $\alpha$' entgegengenommen hat, die Ermittlung der Rohlage $\alpha$' trivial. In diesem Fall ist der Schritt S25 entartet.

Im Schritt S26 speichert die Antriebssteuerung 5 die Rohlage $\alpha$' in den Pufferspeicher 10 ein. Das Speichern im Pufferspeicher 10 erfolgt derart, dass die jeweilige Rohlage $\alpha$' zusätzlich zu bereits im Pufferspeicher 10 hinterlegten Rohlagen $\alpha$' gespeichert wird. Soweit erforderlich, wird der jeweiligen Rohlage $\alpha$' weiterhin der zugehörige Erfassungszeitpunkt tn (n = 1, 2, 3, ... N) zugeordnet und ebenfalls im Pufferspeicher 10 hinterlegt.

Im Schritt S27 prüft die Antriebssteuerung 5, ob das Ermitteln und Zwischenspeichern der Rohlagen $\alpha$' beendet werden soll. Beispielsweise kann die Antriebssteuerung 5 im Schritt S27 anhand der jeweiligen Rohlage $\alpha$' jeweils eine aktuelle Drehzahl n der Rotorwelle 8 ermitteln und prüfen, ob die aktuelle Drehzahl n eine Minimaldrehzahl n2 erreicht oder unterschreitet. Die Minimaldrehzahl n2 kann bei einem geeigneten Prozentsatz der Anfangsdrehzahl n1 liegen, beispielsweise irgendwo zwischen 60 % und 20 % der Anfangsdrehzahl n1, insbesondere zwischen 50 % und 30 %. Gemäß FIG 6 liegt die Minimaldrehzahl n2 beispielsweise bei 2000 U/min. Wenn die Minimaldrehzahl n2 erreicht oder unterschritten wird, wird das Ermitteln und Zwischenspeichern der Rohlagen $\alpha$' beendet. Anderenfalls geht die Antriebssteuerung 5 zum Schritt S24 zurück. Alternativ zu einem Erreichen oder Unterschreiten der Minimaldrehzahl n2 könnte im Schritt S27 beispielsweise auch geprüft werden, ob seit dem Beginn des Austrudelns der Rotorwelle 8 eine hinreichend lange Zeit verstrichen ist. Auch ist es möglich, im Rahmen des Schrittes S27 zu prüfen, ob seit dem Beginn des Erfassens der Rohsignale x, y, $\alpha$' eine bestimmte Anzahl an vollständigen Umdrehungen der Rotorwelle 8 erfolgt ist, insbesondere mindestens eine vollständige Umdrehung.

Wenn das Ermitteln und Zwischenspeichern der Rohlagen $\alpha$' beendet wird, geht die Antriebssteuerung 5 zu einem Schritt S28 über. Im Schritt S28 ermittelt die Antriebssteuerung 5 zumindest die Korrekturgrößen rej, imj. Die Ermittlung der Korrekturgrößen rej, imj erfolgt anhand der im Pufferspeicher 10 hinterlegten Rohlagen $\alpha$'. Hierbei wird nicht nur eine einzelne Rohlage $\alpha$' verwertet, sondern eine Vielzahl von im Pufferspeicher 10 hinterlegten Rohlagen $\alpha$'. Die ermittelten Korrekturgrößen rej, imj hinterlegt die Antriebssteuerung 5 in einem Schritt S29 in einem Korrekturgrößenspeicher 11. Dadurch stehen die Korrekturgrößen rej, imj im nachfolgenden Normalbetrieb für die Ermittlung der jeweiligen Istlage $\alpha$ zur Verfügung.

Die Antriebssteuerung 5 modelliert das Austrudeln der Rotorwelle 8 gemäß einem Modell 12. Das Modell 12 weist eine Anzahl von Modellparametern ki (mit i = 1, 2, 3 ...) auf. Beispielsweise kann das Modell 12 entsprechend der Darstellung in FIG 2 die Form

$$\alpha = \sum_{i=0}^{N1} ki \cdot t^i \qquad (4)$$

aufweisen. Hierbei ist t die Zeit t ab dem Beginn des kraftlosen Betreibens der elektrischen Maschine 1. Alternativ zu einer Modellierung über ein Polynom der Zeit t ist auch eine Modellierung über eine Exponenzialfunktion möglich.

Vorzugsweise ermittelt die Antriebssteuerung 5 entsprechend der Darstellung in FIG 5 im Rahmen des Schrittes S28 nicht nur die Korrekturgrößen rej, imj, sondern zusätzlich auch die Modellparameter ki. Dies ist ohne weiteres möglich, sofern im Pufferspeicher 10 hinreichend viele Rohlagen $\alpha$' gespeichert sind und somit zur Bestimmung der Korrekturgrößen rej, imj und der Modellparameter ki zur Verfügung stehen.

Im Rahmen des Schrittes S27 ermittelt die Antriebssteuerung 5 die Korrekturgrößen rej, imj und gegebenenfalls auch die Modellparameter ki anhand eines überbestimmten Gleichungssystems. Die Ermittlung erfolgt weiterhin vorzugsweise gemäß einem Verfahren, bei dem die Fehlerquadrate minimiert werden. Insbesondere kann die Antriebssteuerung 5 die Korrekturgrößen rej, imj und die Modellparameter ki entsprechend der Darstellung in FIG 7 im Ergebnis gemäß der Beziehung

$$Y = \left( A^T \cdot A \right)^{-1} \cdot A^T \cdot b \qquad (5)$$

ermitteln.

Y ist ein Lösungsvektor Y, dessen Komponenten die gesuchten Korrekturgrößen rej, imj und die gesuchten Modellparameter ki sind. FIG 8 zeigt den Lösungsvektor Y für den Fall, dass nur die Korrekturgrößen re1, im1 für die Grundschwingung ermittelt werden und die höchste in dem Modell 12 betrachtete Potenz der Zeit t die dritte Potenz ist, dass also zusätzlich zu den Korrekturgrößen re1, im1 die Modellparameter k0, k1, k2 und k3 bestimmt werden. FIG 9 zeigt den Lösungsvektor Y für den Fall, dass zusätzlich zu den Korrekturgrößen re1, im1 für die Grundschwingung auch die Korrekturgrößen re2, im2 für die erste Oberschwingung ermittelt werden und die höchste in dem Modell 12 betrachtete Potenz der Zeit t die dritte Potenz ist.

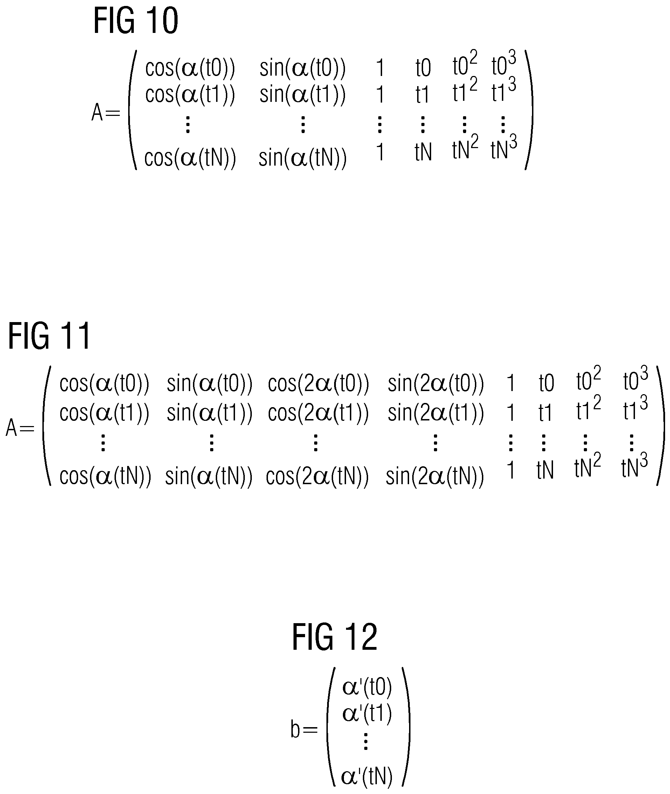

A ist eine Matrix. $A^T$ ist die zugehörige transponierte Matrix. FIG 10 zeigt die Matrix A für den Fall, dass nur die Korrekturgrößen re1, im1 für die Grundschwingung ermittelt werden und die höchste in dem Modell 12 betrachtete Potenz der Zeit t die dritte Potenz ist. FIG 11 zeigt die Matrix A für den Fall, dass zusätzlich zu den Korrekturgrößen re1, im1 für die Grundschwingung auch die Korrekturgrößen re2, im2 für die erste Oberschwingung ermittelt werden und die höchste in dem Modell 12 betrachtete Potenz der Zeit t die dritte Potenz ist. tn sind die Erfassungszeitpunkte tn, zu denen die jeweiligen Rohlagen $\alpha'$ erfasst wurden.

b ist entsprechend der Darstellung in FIG 12 ein Rohlagenvektor.

Es wäre möglich, dass die höchste in dem Modell 12 betrachtete Potenz der Zeit t die zweite Potenz ist. In diesem Fall würde in dem in den FIG 8 und 9 dargestellten Lösungsvektor Y die letzte Komponente entfallen und hiermit korrespondierend in der in den FIG 10 und 11 dargestellten Matrix A die letzte Spalte entfallen. Es wäre ebenso möglich, dass die höchste in dem Modell 12 betrachtete Potenz der Zeit t die vierte Potenz ist. In diesem Fall würde bei dem in den FIG 8 und 9 dargestellten Lösungsvektor Y zusätzlich als weitere, in den FIG 8 und 9 nicht dargestellte Komponente der Modellparameter k4 hinzutreten und hiermit korrespondierend in der in den FIG 10 und 11 dargestellten Matrix A eine weitere Spalte hinzukommen, in welcher jeweils die vierte Potenz der Erfassungszeitpunkte tn eingetragen wird.

Zusammengefasst betrifft die vorliegende Erfindung somit folgenden Sachverhalt:

Ein elektrischer Antrieb weist eine über einen Umrichter 2 mit elektrischer Energie versorgte elektrische Maschine 1 auf. In einem Normalbetrieb nimmt eine Antriebssteuerung 5 für den elektrischen Antrieb kontinuierlich von einem eine Drehstellung einer Rotorwelle 8 der elektrischen Maschine 1 erfassenden Lagegeber 9 jeweils Rohsignale x, y, $\alpha'$ entgegen und ermittelt anhand der Rohsignale x, y, $\alpha'$ in Verbindung mit Korrekturgrößen rej, imj jeweils eine Istlage $\alpha$ der Rotorwelle 8. In Abhängigkeit von einer jeweiligen Solllage $\alpha^*$ und der jeweiligen Istlage $\alpha$ oder einer jeweiligen Solldrehzahl n* und einer unter Verwendung der jeweiligen Istlage $\alpha$ ermittelten jeweiligen Istdrehzahl n der elektrischen Maschine 1 ermittelt sie jeweilige Steuersignale U* für den Umrichter 2 und gibt sie an den Umrichter 2 aus. In einem Sonderbetrieb ermittelt die Antriebssteuerung 5 zunächst Steuersignale U* für den Umrichter 2, aufgrund derer die Rotorwelle 8 mit einer Anfangsdrehzahl n1 rotiert, und gibt sie an den Umrichter 2 aus. Sodann betreibt sie die elektrische Maschine 1 kraftlos, so dass die Rotorwelle 8 austrudelt. Während des Austrudelns nimmt die Antriebssteuerung 5 von dem Lagegeber 9 kontinuierlich jeweils Rohsignale x, y, $\alpha'$ entgegen, ermittelt daraus jeweils eine Rohlage $\alpha'$ der Rotorwelle 8 und speichert sie. Anhand einer Vielzahl von im Sonderbetrieb ermittelten Rohlagen $\alpha'$ ermittelt sie die Korrekturgrößen rej, imj und hinterlegt sie in einem Korrekturgrößenspeicher 11, so dass sie im Normalbetrieb für die Ermittlung der jeweiligen Istlage $\alpha$ zur Verfügung stehen.

Die vorliegende Erfindung weist viele Vorteile auf. Insbesondere ist die Ermittlung der Korrekturgrößen rej, imj ohne jegliche zusätzliche Hardware möglich. Es werden nur die sowieso vorhandene Antriebssteuerung 5 und der sowieso vorhandene Lagegeber 9 benötigt. Dennoch ist eine recht genaue Ermittlung der Korrekturgrößen rej, imj möglich. Ein in der Istlage $\alpha$ verbleibender Restfehler kann auf unter 20 % des Fehlers reduziert werden, der in der jeweils korrespondierenden Rohlage $\alpha'$ vorhanden ist.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

**Patentansprüche**

1. Antriebssteuerung für einen elektrischen Antrieb, der eine über einen Umrichter (2) mit elektrischer Energie versorgte elektrische Maschine (1) aufweist, wobei die Antriebssteuerung in einem Normalbetrieb kontinuierlich

   - von einem eine Drehstellung einer Rotorwelle (8) der elektrischen Maschine (1) erfassenden Lagegeber (9) jeweils Rohsignale (x, y, $\alpha'$) entgegennimmt,
   - anhand der jeweiligen Rohsignale (x, y, $\alpha'$) in Verbindung mit Korrekturgrößen (rej, imj) jeweils eine Istlage ($\alpha$) der Rotorwelle (8) ermittelt und
   - in Abhängigkeit von einer jeweiligen Solllage ($\alpha^*$) und der jeweiligen Istlage ($\alpha$) oder einer jeweiligen Solldrehzahl (n*) und einer unter Verwendung der jeweiligen Istlage ($\alpha$) ermittelten jeweiligen Istdrehzahl (n) der Rotorwelle (8) jeweilige Steuersignale (U*) für den Umrichter (2) ermittelt und an den Umrichter (2) ausgibt,
   **dadurch gekennzeichnet,**
   **dass** die Antriebssteuerung in einem Sonderbetrieb
   - zunächst Steuersignale (U*) für den Umrichter (2) ermittelt, aufgrund derer die Rotorwelle (8) mit einer Anfangsdrehzahl (n1) rotiert, und diese Steuersignale (U*) an den Umrichter (2) ausgibt,
   - sodann die elektrische Maschine (1) kraftlos betreibt, so dass die Rotorwelle (8) austrudelt,

- während des Austrudelns der Rotorwelle (8) von dem Lagegeber (9) kontinuierlich jeweils Rohsignale (x, y, α') entgegennimmt und anhand der jeweiligen Rohsignale (x, y, α') jeweils eine Rohlage (α') der Rotorwelle (8) ermittelt und zwischenspeichert,
- anhand einer Vielzahl von im Sonderbetrieb ermittelten Rohlagen (α') die Korrekturgrößen (rej, imj) ermittelt und
- die Korrekturgrößen (rej, imj) in einem Korrekturgrößenspeicher (11) der Antriebssteuerung hinterlegt, so dass sie im Normalbetrieb für die Ermittlung der jeweiligen Istlage (α) zur Verfügung stehen.

**2.** Antriebssteuerung nach Anspruch 1,
**dadurch gekennzeichnet,**
**dass** die Antriebssteuerung im Sonderbetrieb anhand der jeweiligen Rohsignale (α') jeweils prüft, ob eine aktuelle Drehzahl (n) der Rotorwelle (8) eine Minimaldrehzahl (n2) erreicht oder unterschreitet, und bei Erreichen oder Unterschreiten der Minimaldrehzahl (n2) das Ermitteln und Zwischenspeichern der Rohlagen (α') beendet und zur Ermittlung der Korrekturgrößen (rej, imj) übergeht.

**3.** Antriebssteuerung nach Anspruch 1 oder 2,
**dadurch gekennzeichnet,**
**dass** die Antriebssteuerung das Austrudeln der Rotorwelle (8) gemäß einem Modell (12) modelliert, dass das Modell (12) eine Anzahl von Modellparametern (ki) aufweist und dass die Antriebssteuerung anhand der im Sonderbetrieb ermittelten Rohlagen (α') auch die Modellparameter (ki) ermittelt.

**4.** Antriebssteuerung nach Anspruch 3,
**dadurch gekennzeichnet,**
**dass** das Modell (12) die Form

$$\alpha = \sum_{i=0}^{N1} ki \cdot t^{i}$$

aufweist, wobei t die Zeit (t) ab dem Beginn des kraftlosen Betreibens der elektrischen Maschine (1) ist und ki die Modellparameter (ki) sind.

**5.** Antriebssteuerung nach Anspruch 4,
**dadurch gekennzeichnet,**
**dass** die höchste in dem Modell (12) betrachtete Potenz der Zeit (t) die zweite, dritte oder vierte Potenz ist.

**6.** Antriebssteuerung nach einem der obigen Ansprüche,
**dadurch gekennzeichnet,**
**dass** die Antriebssteuerung im Normalbetrieb aus den jeweils entgegengenommenen Rohsignalen (x, y, α') jeweils eine Rohlage (α') ermittelt und aus der jeweiligen Rohlage (α') anhand der Beziehung

$$\alpha = \alpha' - \sum_{j=1}^{N2} \left[ rej \cdot \cos\left(j\alpha'\right) + imj \cdot \sin\left(j\alpha'\right) \right]$$

die zugehörige jeweilige Istlage (α) der Rotorwelle (8) ermittelt, wobei α die jeweilige Istlage (α), α' die jeweilige Rohlage (α') und rej und imj die Korrekturgrößen (rej, imj) sind.

**7.** Antriebssteuerung nach Anspruch 6,
**dadurch gekennzeichnet,**
**dass** das höchste im Normalbetrieb berücksichtigte Vielfache der jeweiligen Rohlage (α') das Einfache oder das Zweifache der jeweiligen Rohlage (α') ist.

**8.** Antriebssteuerung nach einem der obigen Ansprüche,
**dadurch gekennzeichnet,**
**dass** die Antriebssteuerung die Korrekturgrößen (rej, imj) anhand eines überbestimmten Gleichungssystems ermittelt und dass die Antriebssteuerung die Korrekturgrößen (rej, imj) gemäß einem Verfahren ermittelt, bei dem die Fehlerquadrate minimiert werden.

9. Elektrischer Antrieb, der einen Umrichter (2), eine über den Umrichter (2) mit elektrischer Energie versorgte elektrische Maschine (1) und eine Antriebssteuerung (5) aufweist,
**dadurch gekennzeichnet,**
**dass** die Antriebssteuerung (5) als Antriebssteuerung nach einem der obigen Ansprüche ausgebildet ist.

## FIG 1

## FIG 2

## FIG 3

S1 — [ B ]

S2 — < B=0? >
+
−

S3 — [ ]

S4 — < B=1 >
+
−

S5

S6

## FIG 4

S11 — [ n*(α*, M*) ]

S12 — [ x, y, α' ]

S13 — $$\alpha = \alpha' - \sum_{j=1}^{N2} rej \cdot \cos(j\alpha') + imj \cdot \sin(j\alpha')$$

S14 — [ n ]

S15 — [ U* ]

S16 — [ α ]

# FIG 5

```
              ┌──────────────────┐
              │      10 : ✗       │───S21
              └──────────────────┘
                       │
                       ▼
              ┌──────────────────┐
              │   U*:n ──▶ n1     │───S22
              └──────────────────┘
                       │
                       ▼
              ┌──────────────────┐
              │    U*:M=0         │───S23
              └──────────────────┘
                       │
                       ▼
              ┌──────────────────┐
              │    x, y, α'       │───S24
              └──────────────────┘
                       │
                       ▼
              ┌──────────────────┐
              │       α'          │───S25
              └──────────────────┘
                       │
                       ▼
              ┌──────────────────┐
              │   α' ──▶ 10       │───S26
              └──────────────────┘
                       │
                       ▼
                   ╱───────╲
                  ╱  n≤n2?  ╲────S27
                  ╲         ╱   −
                   ╲───────╱
                       │ +
                       ▼
              ┌──────────────────┐
              │   rej, imj, ki    │───S28
              └──────────────────┘
                       │
                       ▼
              ┌──────────────────┐
              │  rej, imj, ──▶11  │───S29
              └──────────────────┘
                       │
                       ▼
```

## FIG 6

## FIG 7

$$Y = (A^T \cdot A)^{-1} \cdot A^T \cdot b$$

## FIG 8

$$Y = \begin{pmatrix} re1 \\ im1 \\ k0 \\ k1 \\ k2 \\ k3 \end{pmatrix}$$

## FIG 9

$$Y = \begin{pmatrix} re1 \\ im1 \\ re2 \\ im2 \\ k0 \\ k1 \\ k2 \\ k3 \end{pmatrix}$$

## FIG 10

$$A = \begin{pmatrix} \cos(\alpha(t0)) & \sin(\alpha(t0)) & 1 & t0 & t0^2 & t0^3 \\ \cos(\alpha(t1)) & \sin(\alpha(t1)) & 1 & t1 & t1^2 & t1^3 \\ \vdots & \vdots & \vdots & \vdots & \vdots & \vdots \\ \cos(\alpha(tN)) & \sin(\alpha(tN)) & 1 & tN & tN^2 & tN^3 \end{pmatrix}$$

## FIG 11

$$A = \begin{pmatrix} \cos(\alpha(t0)) & \sin(\alpha(t0)) & \cos(2\alpha(t0)) & \sin(2\alpha(t0)) & 1 & t0 & t0^2 & t0^3 \\ \cos(\alpha(t1)) & \sin(\alpha(t1)) & \cos(2\alpha(t1)) & \sin(2\alpha(t1)) & 1 & t1 & t1^2 & t1^3 \\ \vdots & \vdots & \vdots & \vdots & \vdots & \vdots & \vdots & \vdots \\ \cos(\alpha(tN)) & \sin(\alpha(tN)) & \cos(2\alpha(tN)) & \sin(2\alpha(tN)) & 1 & tN & tN^2 & tN^3 \end{pmatrix}$$

## FIG 12

$$b = \begin{pmatrix} \alpha'(t0) \\ \alpha'(t1) \\ \vdots \\ \alpha'(tN) \end{pmatrix}$$

Europäisches
Patentamt

European
Patent Office

Office européen
des brevets

# EUROPÄISCHER RECHERCHENBERICHT

Nummer der Anmeldung

EP 17 20 9247

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG   (IPC) |
|---|---|---|---|
| X<br><br>A | DE 10 2004 050999 A1 (LUK LAMELLEN & KUPPLUNGSBAU [DE])<br>2. Juni 2005 (2005-06-02)<br>* Absätze [0001], [0003] - [0006], [0011], [0012], [0018], [0038], [0039], [0043] - [0045], [0052] *<br>----- | 1,2,8,9<br><br>3-7 | INV.<br>G05B19/042<br>H02K29/06<br>H02P6/00 |
| | | | RECHERCHIERTE SACHGEBIETE  (IPC) |
| | | | G05B<br>H02K<br>H02P |

Der vorliegende Recherchenbericht wurde für alle Patentansprüche erstellt

| Recherchenort | Abschlußdatum der Recherche | Prüfer |
|---|---|---|
| München | 20. Juni 2018 | Messelken, M |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

.......................................................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 17 20 9247

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-06-2018

| Im Recherchenbericht angeführtes Patentdokument | Datum der Veröffentlichung | Mitglied(er) der Patentfamilie | Datum der Veröffentlichung |
|---|---|---|---|
| DE 102004050999 A1 | 02-06-2005 | DE 102004050999 A1<br>FR 2861922 A1<br>US 2005093498 A1 | 02-06-2005<br>06-05-2005<br>05-05-2005 |

Für nähere Einzelheiten zu diesem Anhang : siehe Amtsblatt des Europäischen Patentamts, Nr.12/82

EPO FORM P0461